**Europäisches Patentamt**

(19)     **European Patent Office**

**Office européen des brevets**

(11)     **EP 0 943 130 B1**

(12)     **EUROPÄISCHE PATENTSCHRIFT**

(45) Veröffentlichungstag und Bekanntmachung des Hinweises auf die Patenterteilung:
**04.02.2004   Patentblatt 2004/06**

(51) Int Cl.[7]: **G06N 3/08**, G06F 15/80

(21) Anmeldenummer: **97952719.9**

(86) Internationale Anmeldenummer:
**PCT/DE1997/002902**

(22) Anmeldetag: **03.12.1997**

(87) Internationale Veröffentlichungsnummer:
**WO 1998/025214 (11.06.1998 Gazette 1998/23)**

(54) **VERFAHREN ZUR NICHTSTATIONÄREN TRENNUNG VON SIGNALEN UNTERSCHIEDLICHER QUELLEN**

METHOD FOR NON-STATIONARY SEPARATION OF SIGNALS OF VARIOUS SOURCES

PROCEDE POUR LA SEPARATION NON STATIONNAIRE DE SIGNAUX DE SOURCES DIFFERENTES

(84) Benannte Vertragsstaaten:
**AT BE CH DE DK ES FI FR GB IE IT LI NL PT SE**

(30) Priorität: **03.12.1996  DE 19652336**

(43) Veröffentlichungstag der Anmeldung:
**22.09.1999   Patentblatt 1999/38**

(73) Patentinhaber: **GMD - FORSCHUNGSZENTRUM INFORMATIONSTECHNIK GMBH**
**D-53757 Sankt Augustin (DE)**

(72) Erfinder:
  • **MÜLLER, Klaus-Robert**
    **D-10249 Berlin (DE)**
  • **ZIEHE, Andreas**
    **D-14947 Ruhlsdorf (DE)**
  • **MURATA, Noboru**
    **Saitama 351-01 (JP)**

(74) Vertreter: **Eisenführ, Speiser & Partner**
**Patentanwälte Rechtsanwälte**
**Anna-Louisa-Karsch-Strasse 2**
**10178 Berlin (DE)**

(56) Entgegenhaltungen:
  • **MURATA N ET AL: "Adaptive online learning in changing environments" ADVANCES IN NEURAL INFORMATION PROCESSING SYSTEMS 9. PROCEEDINGS OF THE 1996 CONFERENCE, ADVANCES IN NEURAL INFORMATION PROCESSING SYSTEMS 9. PROCEEDINGS OF THE 1996 CONFERENCE, DENVER, CO, USA, 2-5 DEC. 1996, ISBN 0-262-10065-7, 1997, LONDON, UK, MIT PRESS, UK, Seiten 599-605, XP002062107**
  • **VAN HULLE M M: "A novel unsupervised competitive learning rule with learning rate adaptation for noise cancelling and signal separation" NEURAL NETWORKS FOR SIGNAL PROCESSING IV. PROCEEDINGS OF THE 1994 IEEE WORKSHOP (CAT. NO.94TH0688-2), PROCEEDINGS OF IEEE WORKSHOP ON NEURAL NETWORKS FOR SIGNAL PROCESSING, ERMIONI, GREECE, 6-8 SEPT. 1994, ISBN 0-7803-2026-3, 1994, NEW YORK, NY, USA, IEEE, USA, Seiten 3-11, XP002062108**
  • **CICHOCKI A ET AL: "Self-adaptive neural networks for blind separation of sources" 1996 IEEE INTERNATIONAL SYMPOSIUM ON CIRCUITS AND SYSTEMS. CIRCUITS AND SYSTEMS CONNECTING THE WORLD, ISCAS 96 (CAT. NO.96CH35876), 1996 , ATLANTA , GA , USA, 12-15 MAY 1996, ISBN 0-7803-3073-0, 1996, NEW YORK, NY, USA, IEEE, USA, Seiten 157-160 vol.2, XP002062109**

- CICHOCKI A ET AL: "ROBUST LEARNING ALGORITHM FOR BLIND SEPARATION OF SIGNALS" ELECTRONICS LETTERS, Bd. 30, Nr. 17, 18.August 1994, Seite 1386/1387 XP000472070

- BUREL G: "BLIND SEPARATION OF SOURCES: A NONLINEAR NEURAL ALGORITHM" NEURAL NETWORKS, Bd. 5, Nr. 6, 1.November 1992, Seiten 937-947, XP000334414

**Beschreibung**

Die Erfindung betrifft ein Verfahren und eine Vorrichtung zur nichtstationären Quellentrennung (Quellenvereinzelung) gemäß dem Oberbegriff des Anspruchs 1.

Die Quellentrennung ist ein sowohl theoretisch interessantes als auch für Anwendungen hochrelevantes Gebiet: Die Extraktion eines Signals aus einem Signalgemisch oder aus einem Signalhintergrund aufgrund seiner unabhängigen Merkmale findet sich nicht nur in primären sensorischen Arealen des Gehirns, sondern spielt auch für die technische Signalverarbeitung eine zentrale Rolle als Grundprinzip der Vorverarbeitung (J.J. Hopfield in *Proc. natl. Acad. of Sciences USA*, Bd. 88, S. 6462 (1991) ; H.B. Barlow et al., in "The computing neuron", hrsg. von R. Durbin et al., S. 54, Addison Wesley 1989; C. Jutten et al. in *Signal Processing,* Bd. 24, S. 1 (1991); P. Common in *Signal Processing*, Bd. 36, S. 287 (1994) ; T. Bell et al. in *Neural Comp.*, Bd 7, S. 1129 (1995a)).

So kommt es in vielen Problemen der Signalverarbeitung vor, daß das relevante Signal stark mit Rauschen, mit einem oder sogar mit mehreren anderen Signalen vermischt ist. Verrauschte oder vermischte Signale lassen sich nur schwierig erkennen und weiterverarbeiten, daher sind Algorithmen, die in kontrollierter Weise Signale und Störung trennen, von großer Wichtigkeit. Eine lineare Mischung wäre beispielsweise

$$\vec{I} = M\vec{s} \tag{1}$$

wobei I das gemessene bekannte Signal ist und sowohl das Mischungsverhältnis M als auch die Bestandteile des Originalsignals s unbekannt sind. Konvolutionen oder nichtlineare Mischungen können als Verallgemeinerungen von Gl. (1) definiert werden.

Klassische Methoden, die auf Filtern basieren, setzen voraus, daß sich Spektren von Signal und Rauschen stark unterscheiden.

Im allgemeinen hat man aber weder a-priori Wissen über die Wahrscheinlichkeitsverteilung der Signale noch über die Störung. Dabei hat es sich als zweckmäßig erwiesen, die Wahrscheinlichkeitsdichten der vermischten Prozesse blind (datengetrieben) zu schätzen. Für die Quellentrennung versuchte man dabei Architekturen zu finden, welche die Transformation zwischen Eingangs- und Ausgangssignalen maximieren oder aber untereinander minimal korrelierte Ausgabesignale zu erhalten (G. Decco et al., "An informationtheoretic approach to neural computing", Springer 1996). Üblicherweise wird dazu die Entropie der einzelnen Ausgaben approximiert.

Dies geschieht beispielsweise durch eine Edgeworth oder eine Gram-Charlier Entwicklung der Momente (cf. Jutten et al 1991; Common 1994; S. Amari et al., in "Advances in Neural Information Processing Systems 8 (NIPS 95)", hrsg. von D.S. Touretzky et al., MIT Press 1995). Bell et al. (1995a) verwenden eine informationstheoretisch motivierte Anti-Hebb-Regel, um sich die notwendigen Momente höherer Ordnung zu erzeugen. Eine weitere sehr elegante Methode zur Entmischung ist ein von Molgedy und Schuster vorgestellter linearer Algorithmus. Hier werden nicht nur gleichzeitige, sondern auch zeitversetzte Kreuzkorrelationen der Ausgaben minimiert und so kann durch Zeitversetzung die Berücksichtigung von Korrelationen höherer Ordnung vermieden werden (L. Molgedey und H.G. Schuster, in *Phys. Rev. Lett.*, Bd. 72, S. 3634 (1994)).

Quellentrennungsalgorithmen werden u.a. zur Analyse von EEG Signalen eingesetzt (cf. S. Makeig et al., in "Advances in Neural Information Processing Systems 8 (NIPS 95)", hrsg. von D.S. Touretzky et al., S. 145, MIT Press 1995; Bell et al. 1995a) und sind auch für die Spracherkennung von großem Nutzen (T. Bell et al. in "Proc. of ICASSP '95", 1995b).

Man unterscheidet zwischen der Quellentrennung, in der (a) stationäre und (b) instationäre Mischungen vorliegen. Während Fall (a) Stand der Technik ist, ist der nichtstationäre Fall (b) bisher technisches Neuland. In der Praxis liegen normalerweise instationäre Mischungen vor - Fall (b). Es gibt wenige Algorithmen, die potentiell für den nichtstationären Fall (b) von Nutzen sein könnten. Ein Algorithmus für den nichtstationären Fall muß nämlich ein On-line-Algorithmus sein, der schnell genug eine Änderung der Mischung erkennen und ihr folgen kann.

Es gibt auch eine Reihe von On-line-Algorithmen, die Klassifikations- oder Regressionsanwendungen ihren Einsatz finden (Saad et al., *Workshop at NIPS '95*, siehe http://neural-server.aston.ac.uk/nips95/workshop.html, und darin enthaltene Quellen (1995)). Einige dieser On-line-Verfahren (C. Darken et al., in "Advances in Neural Information Processing Systems 4 (NIPS 91)", hrsg. von J. E. Moody et al., San Mateo CA: Morgan Kaufmann, S. 1009 (1992)) sind sogar in der Lage, eine stationäre Lösung - Fall (a) - gut zu approximieren, indem sie zwei Phasen der Konvergenz durchlaufen, in der die Lernrate $\eta$ unterschiedlich angepaßt wird. Es wird dabei ein Gradientenabstieg in den Parametern *w*

$$\hat{w}_{t+1} = \hat{w}_t - \eta_t C(\hat{w}_t) \frac{\partial}{\partial w} l(x_{t+1}m, y_{t+1}; \hat{w}_t) \tag{2}$$

benutzt, wobei $l(x_{t+1}, y_{t+1}; \hat{w}_t)$ die Fehler- bzw. Likelihood-Funktion ist. Der Index $t$ beschreibt die Zeit bzw. die schon gesehene Anzahl der Daten, C ist eine Matrix, die unterschiedlich gewählt werden kann.

In einer ersten Phase wird die Lernrate $\eta$ konstant gehalten:

$$\eta = \text{konstant}, \tag{3}$$

um nachfolgend in einer zweiten Phase, sobald der stochastische Suchprozess (Gradientenabstieg aus Gl. (2)) in die Nähe des gesuchten Minimums kommt, reduziert zu werden:

$$\eta = \frac{c}{t} \tag{4}$$

Im Jargon spricht man hier von einem "Abkühlen" der Lernrate.

Je mehr Daten das Lernverfahren sieht (je größer also der Index t aus Gl. (4) wird), desto geringer wird die Lernrate $\eta$ und desto geringer die Suchgeschwindiakeit im Phasenraum. Ein herkömmlicher On-Line-Algorithmus wird also nach gewisser Zeit in Phase 1 in die zweite Phase übergehen und zur Lösung konvergieren.

Ändert sich die Statistik der Daten, zum Beispiel im Falle der Quellentrennung das Mischungsverhältnis der Signale, dann wird das herkömmliche On-Line-Ver-fahren der veränderten Lösung nur mit winzigen (und immer kleiner werdenden) Suchschritten (cf. Gl.4) hinterhereilen, da es nicht mehr zur ersten Phase - der konstanten großen Lernrate - zurückkehren kann. Das bedeutet, daß die neue Lösung mit veränderter Datenstatistik gar nicht erreicht wird, somit das On-line-Verfahren trotz Adaptivität in der Praxis völlig nutzlos ist.

Die oben beschriebenen On-line-Algorithmen sind in der Praxis nicht schnell genug in der Lage, eine Nichtstationaritat zu erkennen und zu verfolgen, da sie nicht automatisch aus der zweiten Phase in die erste zurückkehren können, somit sind die beschriebenen On-line-Algorithmen für den instationären Fall (b) trotz Adaptivität nutzlos.

Betrachtet man On-line-Lernen mit konstanter Lernrate, so kann man dabei einer Änderung der Statistik folgen, jedoch ist es relativ langsam und aus systematischen Gründen nicht in der Lage, die Lösung sauber zu approximieren. Denn die Varianz oder Abweichung von der Optimallösung ist immer von der Größenordnung der Lernrate abhängig. So besteht bei konstanter Lernrate das Problem, entweder mit großer Lernrate einer Änderung der Statistik schnell zu folgen, aber gleichzeitig auch immer weit (Größenordnung der Lernrate) von der Lösung weg zu sein, oder mit kleiner Lernrate eine Statistikänderung zu langsam zu verfolgen, aber' gleichzeitig dafür der Lösung etwas näher zu sein.

Da der Batch-Algorithmus alle Daten zur Schätzung nimmt, ist er im instationären Fall immer weit weg von der optimalen Lösung, da er den Mittelwert der sich zeitlich verändernden Lösung berechnet und sich somit als relativ nutzlos erweist.

Nur eines dieser Verfahren ist in der Lage, Nichtstationarität zu erkennen und sich schnell anzupassen. Sompolinski et al 1995 definierten diesen sogenannten "learning of learning" Algorithmus. Der "learning of learning" Algorithmus ist in der Lage, zu detektieren, wann sich die Statistik der Daten verändert und- automatisch in die erste Phase der stochastischen Suche mit konstanter (großer) Lernrate $\eta$ zurückzuschalten. Nach schnellem Konvergieren bis in Lösungsnähe (erste Phase), wird die Lernrate wiederum "abgekühlt" (zweite Phase cf. Gl.(4). Leider ist das "learning of learning" Verfahren nur für ein einfaches Perceptron mit einer diskreten Fehlerfunktion definiert und ist daher in der von H. Sompolinski et al. in "Neural Networks: The Statistical Mechanics Perspective", hrsg. von J.-H. Oh et al., S.105 Singapore: World Scientific (1995) angegebenen Form nicht allgemein anwendbar. Insbesondere sind Quellentrennungsprobleme kontinuierlich und nicht diskret und es kann keine explizite Fehlerfunktion definiert werden.

Weiteren Stand der Technik bilden die Dokumente VAN HÜLLE M M: 'A novel unsupervised competitive leaming rule with leaming rate adaptation for noise cancelling and Signal Separation[1] NEURAL NETWORKS FOR SIGNAL PROCESSING IV. PROCEEDINGS OF THE 1994 IEEE WORKSHOP (CAT. NO.94TH0688-2), PROCEEDINGS OF IEEE WORKSHOP ON NEURAL NETWORKS FOR SIGNAL PROCESSING, ERMIONI, GREECE, 6-8 SEPT. 1994, ISBN 0-7803-2026-3, 1994, NEW YORK, NY, USA, IEEE, USA, Seiten 3-11, und CICHOCKI A ET AL: 'Self-adaptive neural networks for blind Separation of sources' 1996 IEEE INTERNATIONAL SYMPOSIUM ON CIRCUITS AND SYSTEMS. CIRCUITS AND SYSTEMS CONNECTING THE WORLD, ISCAS 96 (CAT. NO.96CH35876), 1996 , AT-LANTA , GA , USA, 12-15 MAY 1996, ISBN 0-7803-3073-0, 1996, NEW YORK, NY, USA, IEEE, USA, Seiten 157-160 vol.2.

Zusammenfassend bestehen also folgende Nachteile der bekannten Verfahren:

1. Herkömmliche adaptive On-line-Aigorithmen können nicht effizient und schnell mit Nichtstationarität der Datenstatistik umgehen. Man kann zeigen, daß sie die veränderte Optimallösung nicht erreichen können.

2. On-line-Algorithmen mit fester Lernrate sind systematisch entweder ungenau oder langsam.

3. Batch Verfahren approximieren den Mittelwert aller zwischenzeitlich angenommenen Lösungen, wenn eine zeitvariante Datenstatistik vorliegt und sind daher sehr ungenau.

4. Das "learning of learning" Verfahren ist zwar adaptiv und kann effektiv mit Nichtstationarität umgehen, es ist aber nur für den Fall einer diskreten Fehlerfunktion definiert und ist daher in dieser Form für die Praxis nicht einsetzbar.

Der Erfindung liegt demgemäß die Augabe zugrunde, ein Verfahren der eingangs genannten Gattung anzugeben, welches sich on-line an Instationaritäten in der Datenstatistik für die Anwendungen Regression, Klassifikation und Quellentrennung adaptiert.

Diese Aufgabe wird mit den im Anspruch 1 angegebenen Maßnahmen gelöst.

Die "learning of learning" Idee wurde erfindungsgemäß erweitert und funktioniert nun auch für den Fall, daß (a) eine kontinuierliche Fehlerfunktion und/oder (b) die Hessematrix gegeben ist oder weder (a) noch (b) gegeben ist und entweder (c) ein Fluß definiert werden kann, oder (d) daß keine weitere Information vorliegt, und das entmischte Signal direkt zur Berechnung von Kovarianzmatrizen verwendet wird. Das bedeutet, daß das erfindungsgemäße Ver-fahren ein allgemeiner On-line-Algorithmus ist, der sich selbständig an Änderungen der Datenstatistik anpassen kann. Es kann außerdem gezeigt werden, daß sich der erweiterte Algorithmus nach dem erfindungsgemäßen Verfahren in den Fällen (a) bis (d) beweisbar optimal schnell an veränderte Bedingungen anpaßt. Der erfindungsgemäße On-line-Algorithmus kann zur Regression, Klassifikation und Quellentrennung eingesetzt werden. Die Konvergenzrate ist sowohl bei stationärer als auch bei instationärer Datenstatistik beweisbar optimal. Es lassen sich damit auch bekannte Verfahren zur Quellentrennung als On-line-Lernproblem formulieren und durch das erfindungsgemäße Verfahren mit optimaler Konvergenzrate instationäre Mischungen entmischen.

Das erfindungsgemäße Verfahren bzw. die Vorrichtung zur Durchführung des Verfahrens weist dabei insbesondere die folgenden Vorteile auf :

- Es ist in der Lage, unüberwacht - also ausschließlich datengetrieben - zu lernen und selbständig, schnell und präzise Instationaritäten in der Datenstatistik zu erkennen und zu verfolgen. Dabei benötigt es im Extremfall nur einen Datenpunkt pro Zeit zur Verarbeitung.

- Die Schätzung der Statistik ist in Echtzeit möglich.

- Weiterhin gewährleistet es auch für stationäre Datenstatistiken eine optimale Konvergenz der Schätzung. Der zugrundeliegende On-line-Algorithmus ist einfach implementierbar, und hat beweisbar optimales Konvergenzverhalten für alle Fälle stationärer und instationärer Datenstatistik (asymptotisches Erreichen der Cramer-Rao Schranke).

- Es erreicht eine Adaptivität mit optimaler Adaptionsgeschwindigkeit.

- Jeder Quellentrennungsalgorithmus, der als On-line-Lernproblem formuliert werden kann, kann in das erfindungsgemäße On-line-Verfahren umformuliert werden und ist dann auch in der Lage, nichtstationäre Mischungen zu erkennen und zu verfolgen.

- Der On-line-Algorithmus arbeitet in den Fällen, wenn weder (a) noch (b) gegeben ist und nur (c) ein Fluß definiert werden kann. Selbst wenn keine weitere Information vorliegt, arbeitet das erfindungsgemäße Verfahren zuverlässig, indem (d) das entmischte Signal zur Berechnung von Kovarianzmatrizen verwendet wird.

- Der On-line-Algorithmus ist auch für Regression und Klassifikation einfach anwendbar.

- Das Verfahren ist in Hardware einfach und kostengünstig realisierbar.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figur näher dargestellt. Es zeigen:

Figur 1 ein Ausführungsbeispiel einer Vorrichtung zur Durchführung des Verfahrens in Blockschaltung,

Figur 1a ein Detail der in Figur 1 dargestellten Vorrichtung,

Figuren 2 und 3 Signaldarstellungen zu dem in den Figuren 1 und 1a dargestellten Ausführungsbeispiel,

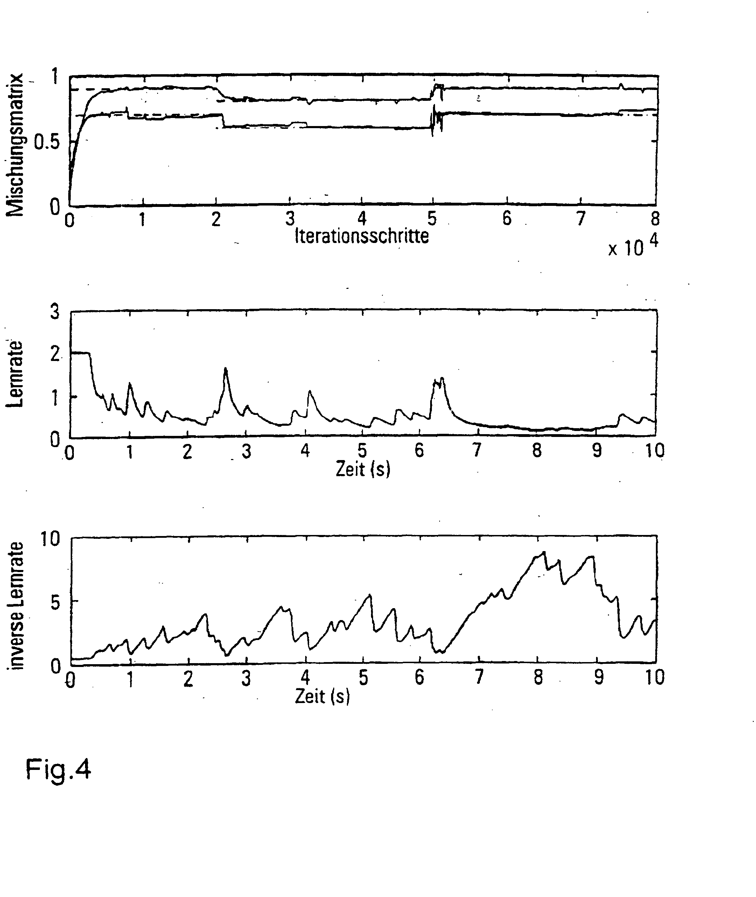

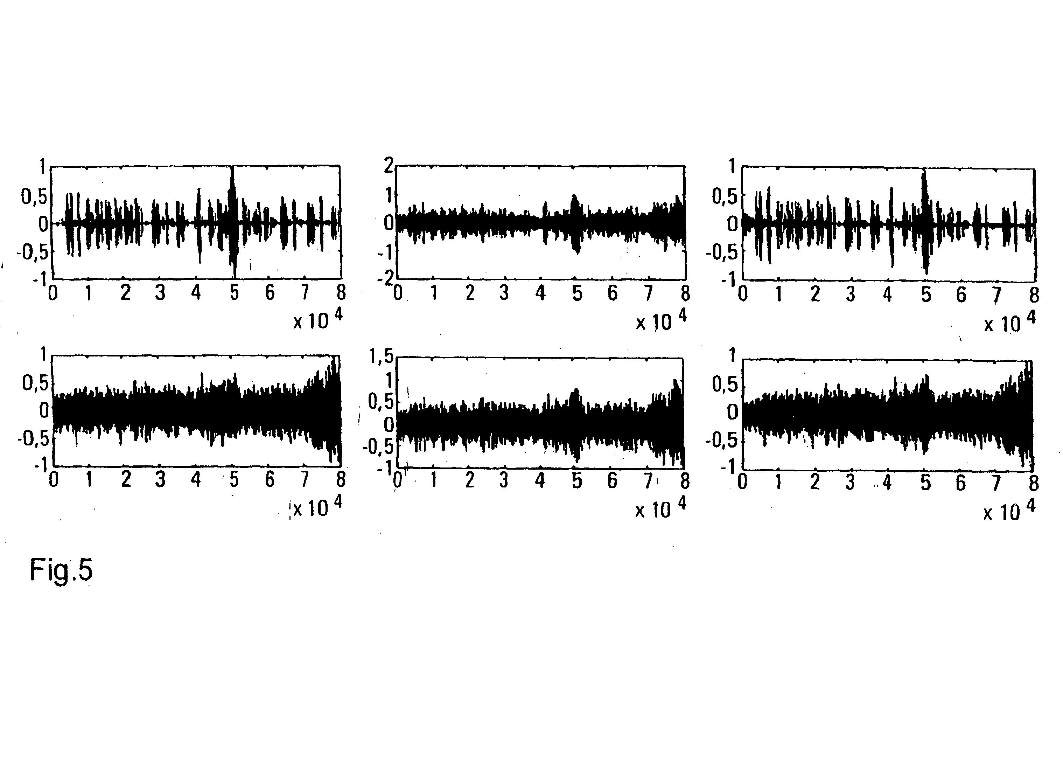

Figuren 4 bis 10 weitere Signaldarstellungen zu dem erfindungsgemäßen Verfahren.

Im folgenden werden zunächst die technischen Einzelheiten des erfindungsgemäßen Verfahrens erläutert:

Ausgegangen wird von einer Reihe von unabhängigen Beispielen in Form von Signalwerten $(x_1,y_1),(x_2,y_2),...$ als Eingangsgrößen. Ziel des Lernprozesses ist es dabei, eine Schätzung für den Parameter $w$ zu erhalten, welche die in den Daten inhärente Regel möglichst gut simulieren kann. Daher modifiziert das Verfahren seinen Parameter $w_t$ zur Zeit $t$ in $w_{t+1}$, indem nur das nächste von der Statistik gegebene Beispiel $(x_{t+1},y_{t+1})$ verwandt wird.

Dazu wird eine differenzierbare Fehlerfunktion $l(x,y;w)$ verwendet, die die Performanz des Schätzers mit Parameter $w$ bewertet. Die Größe

$$R(w) = \langle l(x,y;w) \rangle \tag{5}$$

ist der "expected loss" oder der Generalisierungsfehler des Schätzers, das durch den Parameter w definiert ist und $\langle \rangle$ beschreibt die Mitteilung über die Verteilung der Beispiele $(x,y)$. Der Parameter $w^*$ des besten Schätzers ist gegeben durch

$$w^* = \arg\min R(w). \tag{6}$$

Es wird der folgende stochastische Gradientenabstieg

$$\hat{w}_{t+1} = \hat{w}_t - \eta_t C(\hat{w}_t)\frac{\partial}{\partial w}l(x_{t+1},y_{t+1};\hat{w}_t) \tag{7}$$

benutzt, wobei $\eta_t$ die Lernrate ist, die auch von der Zeit $t$ abhängig sein kann und $C(\hat{w}_t)$ eine positiv-de.finite Matrix ist, die auch von $w_t$ abhängen kann. Die Matrix C spielt die Rolle eines Riemannschen metrischen Tensors im Raum der $\{w\}$.

Wenn $\eta_t$ gleich einer kleinen Konstante ist, dann konvergiert $E[\hat{w}_t]$ nach $w^*$ und die Varianz $\mathrm{Var}[\hat{w}_t]$ nähert sich einer nicht verschwindenden Matrix der Ordnung $O(\eta)$. Das heißt, $w_t$ fluktuiert um $w^*$. Wenn $\eta_t = c/t$ (abgekühlte Lernrate), dann konvergiert $w_t$ lokal nach $w^*$. Wenn sich wie oben beschrieben die Lernregel ändert, dann kann die wie $\eta_t = c/t$ gewählte Lernrate jedoch dem Wechsel der Lernregel nicht folgen, da $\eta_t = c/t$ zu klein wird und in der Praxis die veränderte optimale Lösung nicht mehr erreichen kann.

Die Idee einer adaptiven Lernrate $\eta_t$ wurde "learning of the learning rule" genannt (Sompolinsky et al. 1995). Dieses Konzept wird bei dem erfindungsgemäßen Verfahren auf beliebige differenzierbare Fehlerfunktionen verallgemeinert. Dazu wird folgender Algorithmus zugrundegelegt:

$$\hat{w}_{t+1} = \hat{w}_t - \eta_t K^{-1}(\hat{w}_t)\frac{\partial}{\partial w}l(x_{t+1},y_{t+1};\hat{w}_t) \tag{8}$$

$$\eta_{t+1} = \eta_t + \alpha\eta_t\left(\beta\left(l(x_{t+1},y_{t+1};\hat{w}_t) - \hat{R}\right) - \eta_t\right) \tag{9}$$

wobei $\alpha$ und $\beta$ Konstanten sind, $K(\hat{w}_t)$ ist die Hessematrix des Erwartungswertes der Fehlerfunktion $\partial^2 R(\hat{w}_t)/\partial w\partial w$ und $R$ ist ein Schätzer von $R(w^*)$. Wenn der Fehler explizit als Funktion von $x$ und $y$ gegeben ist, kann $R$ rekursiv als Schätzwert angenommen werden durch

$$\hat{R}_{t+1} = (1-\gamma)\hat{R}_t + \gamma l(x_{t+1};y_{t+1};\hat{w}_t) \tag{10}$$

Intuitiv wird damit die Lernrate $\eta$ aus Gl.(9) durch den verbleibenden Fehler kontrolliert. Wenn der Fehler groß ist, dann nimmt $\eta$ einen großen Wert an. Wenn er klein ist, d.h. der geschätzte Parameter nahe beim Optimum ist, dann geht $\eta$ automatisch gegen 0.

Um das dynamische Verhalten von $(\hat{w}_t,\eta_t)$ zu erhalten, wird eine kontinuierliche Version der obigen Gleichungen benutzt, über die bezüglich des Input-output-Paares $(x_t, y_t)$ gemittelt wurde

$$\frac{d}{dt} w_t = -\eta_t K(w_t)^{-1} \left\langle \frac{\partial}{\partial w} l(x, y; w_t) \right\rangle \qquad (11)$$

$$\frac{d}{dt} \eta_t = \alpha \eta_t \left( \beta \langle l(x, y; w_t) - \hat{R} \rangle - \eta_t \right). \qquad (12)$$

Es gilt $\langle \partial l(x,y;w^*)/\partial w \rangle = 0$, und so ergibt sich asymptotisch

$$\left\langle \frac{\partial}{\partial w} l(x, y; w_t) \right\rangle \cong K^* \left( w_t - w^* \right),$$

$$\langle l(x, y; w_t) - \hat{R} \rangle \cong R(w^*) - \hat{R} + \frac{1}{2} \left( w_t - w^* \right)^T K^* \left( w_t - w^* \right),$$

wobei $K^* = \partial^2 R(w^*)/\partial w \partial w$. Unter der Annahme, daß $R(w^*) - \hat{R}$ klein ist und $K(w_t) \cong K^*$, wird erhalten

$$\frac{d}{dt} w_t = -\eta_t(w_t - w^*) \qquad (13)$$

$$\frac{d}{dt} \eta_t = \alpha \eta_t \left( \frac{\beta}{2} \left( w_t - w^* \right)^T K^* \left( w_t - w^* \right) - \eta_t \right) \qquad (14)$$

Es wird eine quadratische Fehlergröße eingeführt

$$e_t = \frac{1}{2}(w_t - w^*)^T K^*(w_t - w^*), \qquad (15)$$

wobei sich aus Gl.(13) und Gl.(14) ergibt

$$\dot{e}_t = -2\eta_t e_t, \qquad \dot{\eta}_t = \alpha\beta\eta_t e_t - \alpha\eta_t^2. \qquad (16)$$

Das Verhalten des Algorithmus als Gleichungssystem (16) läßt sich wie folgt deuten: Der Ursprung (0,0) ist ein Attraktor seiner Dynamik und das Attraktionsbassin hat eine fraktale Grenze. Wird von einem adäquaten Anfangswert gestartet, hat das Gleichungssystem die Form

$$e_t = \frac{1}{\beta} \left( \frac{1}{2} - \frac{1}{\alpha} \right) \cdot \frac{1}{t} \quad (\alpha > 2), \quad \text{und} \quad \eta_t = \frac{1}{2} \cdot \frac{1}{t}. \qquad (17)$$

Hierbei ergeben sich als bedeutsame Vorteile:

- Die 1/$t$ Konvergenzrate des Verallgemeinerungsfehlers $e_t$ ist die optimale (schnellstmögliche) Ordnung der Konvergenz jedes beliebigen Schätzers $w_t$, der zum Optimum $w^*$ konvergiert.

- Gl. (13) und (14) geben einen allgemeinen On-line-Algorithmus der schnellstmöglichen Konvergenzrate.

- Die Lösung beruht darauf, den skalaren Abstand $e_t$ im Gewichtsraum zu verwenden.

- Damit der obige Algorithmus funktionieren kann, müssen die Größen $K^*$, $l$ verfügbar sein.

Insbesondere der letzte Punkt ist in der Praxis oft nicht erfüllt, so daß der gefundene Algorithmus weiter verallgemeinert werden muß.
Vielfach sind in der Praxis sind weder die Hessematrix $K^*$ noch der Erwartungswert des Fehlers noch das Minimum des Erwartungswerts des Fehlers bekannt. Weiterhin gibt es in einigen Anwendungen (z.B. Quellentrennung) noch nicht einmal eine explizite Fehlerfunktion. Ein verallgemeinerter Lernalgorithmus ist daher der Folgende

$$\hat{w}_{t+1}=\hat{w}_t-\eta_t f(x_{+1},y_{t+1};\hat{w}_t), \tag{18}$$

wobei der Fluß $f$ die Modifikation der Parameter bestimmt, wenn ein neues Beispiel $(x_{t+1},y_{t+1})$ gegeben ist. Hierbei muß nicht die Existenz einer Fehlerfunktion angenommen werden, sondern es wird nur ein gemittelter Fluß benötigt, der am Optimum verschwindet, i.e.

$$\langle f(x,y;w^*)\rangle=0$$

Für den Fall, daß eine Fehlerfunktion gegeben ist, kann der Gradient der Fehlerfunktion als Fluß eingesetzt werden. Es wird nun die gemittelte, kontinuierliche Version von Gleichung (18) benutzt und um das Optimum

$$\frac{d}{dt}w_t=-\eta_t\langle f(x,y;w_t)\rangle \cong -\eta_t K^*(w_t-w^*) \tag{19}$$

entwickelt, wobei $K^* = \langle\partial f(x,y;w^*)/\partial w\rangle$ ist. Unter der Voraussetzung, daß ein Vektor $v$ mit der Eigenschaft

$$v^T K^*=\lambda v^T \tag{20}$$

und weiterhin

$$\xi_t=\langle v^T f(x,y;w_t)\rangle \cong v^T K^*(w_t-w^*) \tag{21}$$

definiert ist, kann die Dynamik der $\xi$ als

$$\frac{d}{dt}\xi_t= -\lambda\eta_t\xi_t, \tag{22}$$

approximiert werden. Mit den Variablen $\xi$ wird eine Modifikation der Lernregel für $\eta$ wie folgt festgelegt

$$\eta_{t+1}=\eta_t + \alpha\eta_t(\beta|\xi_t|-\eta_t), \tag{23}$$

mit einer kontinuierlichen Version als

$$\frac{d}{dt}\eta_t = \alpha\eta_t(\beta|\xi_t|-\eta_t), \tag{24}$$

$\xi$ läßt sich dabei als eine eindimensionale Pseudodistanz verstehen, bei der der mittlere Fluß $f$ auf eine einzelne Richtung *v* projiziert wird. Es wurde nun eine "intelligente Projektion" so gefunden, bei der es hinreichend ist, alle Dynamik des Flusses entlang dieser Richtung zu beobachten. Die Variable ξ ist entweder immer positiv oder immer negativ, abhängig davon, welcher Anfangswert gewählt wird; η ist positiv. Die beiden Gleichungen (22) und 24) sind damit aquivalent zum Gleichungssystem (16). Somit sind ihre asymptotischen Lösungen gegeben als

$$\xi_t = \frac{1}{\beta}\left(\frac{1}{\lambda} - \frac{1}{\alpha}\right) \cdot \frac{1}{t}, \qquad \eta_t = \frac{1}{\lambda} \cdot \frac{1}{t}. \qquad (25)$$

Wiederum ähnlich wie im letzten Abschnitt wurde gezeigt, daß der Algorithmus konvergiert, jedoch diesmal ohne eine explizite Fehlerfunktion oder eine Hessematrix zu benutzen.

In diesem Algorithmus ist ein wichtiges Problem, eine geeignete Projektion zu finden. Dafür wird von folgenden Annahmen ausgegangen: (1) der minimale Eigenwert der Matrix $K^*$ ist genügend viel kleiner als der zweitgrößte Eigenwert und (2) daher wird sich der Parametervektor $w_t$ nach einer großen Anzahl Iterationen von der Richtung des minimalen Eigenvektors von $K^*$ dem Optimum nähern. Unter diesen Bedingungen kann die Entwicklung des geschätzten Parameters als eindimensionaler Prozess verstanden werden und es können beliebige Vektoren als *v* verwendet werden, außer den zum minimalen Eigenvektor orthogonalen Vektoren. Der beste und effizienteste Vektor wird natürlich der minimale Eigenvektor selbst sein, der (für eine große Anzahl von Iterationen) durch

$$v = \langle f \rangle / \|\langle f \rangle\|.$$

approximiert werden kann. Daher können wir

$$\xi = \|\langle f \rangle\| \qquad (26)$$

einsetzen. Ersetzt man nun den instantanen Mittelwert des Flusses durch einen gleitenden (leaky) Mittelwert, dann erhält man folgenden modifizierten Algorithmus

$$\hat{w}_{t+1} = \hat{w}_t - \eta_t f\left(x_{t+1}, y_{t+1}; \hat{w}_t\right), \qquad (27)$$

$$r_{t+1} = (1 - \delta)r_t + \delta f\left(x_{t+1}, y_{t+1}; \hat{w}_t\right), \qquad (0 < \delta < 1) \qquad (28)$$

$$\eta_{t+1} = \eta_t + \alpha\eta_t\left(\beta\|r_{t+1}\| - \eta_t\right), \qquad (29)$$

wobei δ den Grad des gleitenden (leaky) Mittelwertes kontrolliert und *r* als Hilfsvariable verwandt wird, um den gleitenden (leaky) Mittelwert des Flusses zu berechnen. Dieser Satz Lernregeln konvergiert auch asymptotisch und ist sehr einfach zu berechnen. Weiterhin induziert der gleitende (leaky) Mittelwert Fluktuationen, die sich in praktischen Anwendungen als sehr hilfreich erweisen.

In den Fallen, in denen auch kein Fluß angenommen werden soll, arbeitet der On-line Algorithmus ebenfalls, indem das entmischte Signal zur Berechnung von Kovarianzmatrizen herangezogen wird.

Die zeitversetzte Kovarianzmatrix eines stationären, zeitdiskreten stochastischen Prozesses ist definiert durch den Erwartungswert des außeren Produktes der Datenmatrix mit sich selbst.

$$K_t^\tau(\bar{x}) = E\{\bar{x}_t \bar{x}_{t+\tau}^T\} \qquad (30)$$

Die Zeitversetzung τ kann dabei auch den Wert Null annehmen. Auf der Diagonalen der Kovarianzmatrix stehen die Werte der Autokorrelationsfunktion zum Zeitpunkt t. Die Nebendiagonalelemente bilden die Werte der Kreuzkorrelationsfunktion der jeweiligen Signale zum Zeitpunkt t. Daraus folgt eine wichtige Eigenschaft der Kovarianzmatrix, sie ist eine symmetrische Matrix.

Im Fall eines nichtstationären Prozesses kann die Kovarianzmatrix adaptiv online geschätzt werden

$$K_{t+1}^{\tau}(\bar{x}) = (1 - \frac{1}{\eta_t^{\tau}}) K_t^{\tau}(\bar{x}) + \frac{1}{\eta_t^{\tau}} \bar{x}_{t+1} \bar{x}_{t+1}^T \qquad (31)$$

$$\eta_{t+1}^{\tau} = \eta_t^{\tau} + \alpha \eta_t^{\tau} (\beta \| K_{t+1}^{\tau} \| - \eta_t^{\tau}) \ . \qquad (32)$$

Nun kann der von Schuster und Molgedey (1994) vorgeschlagene Ansatz, das Quellentrennungsproblem mittels simultaner Diagonalisierung zweier oder mehrerer (zeitverschobener) Kovarianzmatrizen zu lösen, zu einem einfachen und effizienten online Verfahren erweitert werden.

Dazu wird die nach Gleichung (31) und (32) bestimmte Folge von Kovarianzmatrizen mit einem online Verfahren simultan diagonalisiert: (1) In einem online whitening Schritt und (2) in einer online Berechnung einer orthogonalen Transfomation durch die adaptive (online) Lösung eines Eigenwertproblems (zum Beispiel mit Sanger's Rule (T. D. Sanger, in *Neural Networks,* Bd. 2, S. 459 (1989)), oder mit einem anderen numerischen adaptiven Eigenwertlösungsverfahren) gemäß

$$W_{t+1} = W_t - \eta_t^{r_1} (W_t K_{t+1}^{\tau_1} W_t^T - 1) \qquad (33)$$

$$C_{t+1} = W_{t+1} K_{t+1}^{\tau_2} W_{t+1}^T \qquad (34)$$

$$V_{t+1} = V_t + \eta_{t+1}^{r_2} [C_{t+1} V_t - V_t - triu(V_t^T C_{t+1} V_t)] \qquad (35)$$

$$\hat{w}_{t+1} = V_{t+1} W_{t+1} \ . \qquad (36)$$

Dabei ist triu eine Operation, die die obere Dreiecksmatrix auswählt, und die Elemente unterhalb der Diagonalen zu Null setzt.

Zusammenfassen besteht die letztgenannte Variante daraus

1. adaptiv die Kovarianzmatrix und mindestens eine zeitverschobene Kovarianzmatrix zu schätzen,

2. die mindestens zwei Kovarianzmatrizen simultan zu diagonalisieren, so daß eine Entmischungsmatrix gewonnen wird, die die Signalquellen trennt.

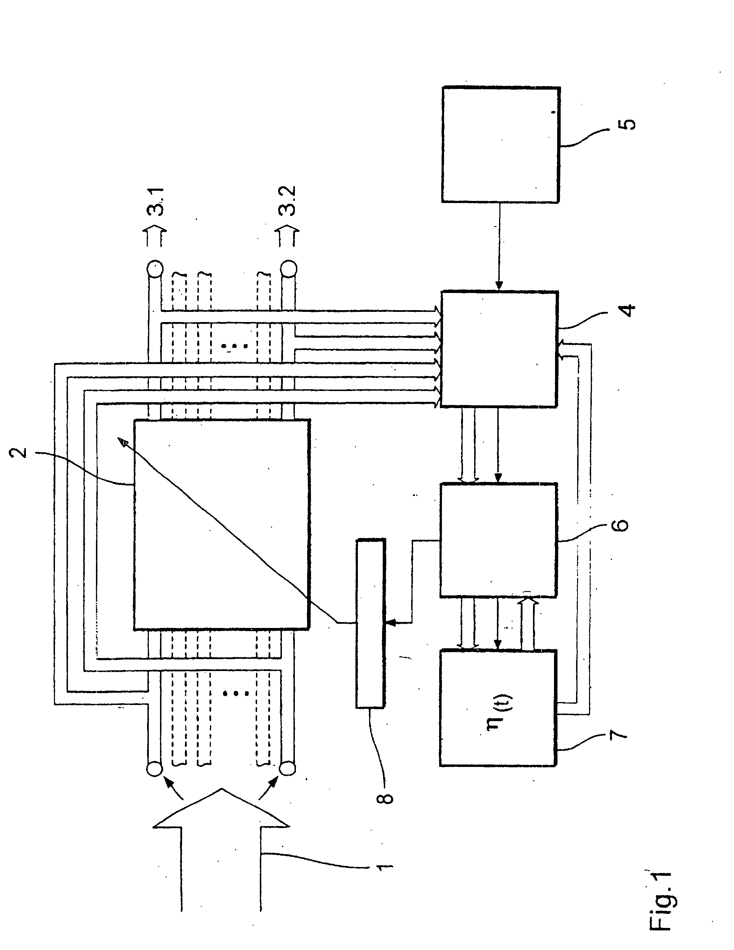

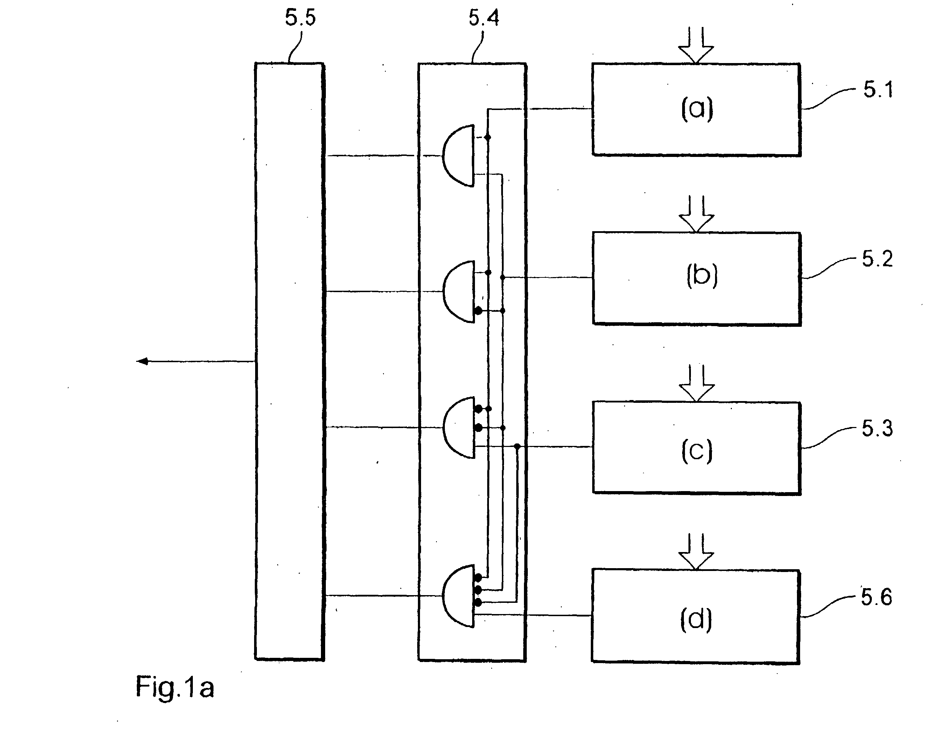

Die Anwendung als Verfahren soll nachfolgend anhand des in Figur 1 wiedergegebenen Blockschaltbilds näher erläutert werden. Hierbei soll die folgende beispielhafte Illustration eines Ausführungsbeispiels dieser Lösung in der akustischen Quellentrennung zugrunde gelegt werden:

Zwei Sprecher bewegen sich im Raum und unterhalten sich dabei. Über zwei Mikrofone werden ihre (instationär) gemischten Sprachsignale aufgenommen. Diese werden der nachfolgend dargestellten Verarbeitungseinheit zugeführt. Trotz der ständigen veränderten Mischung, gelingt es, die akustischen Einzelsprechersignale aus der Mischung herauszufiltern. Am Ausgang erscheinen die getrennten Sprachsignale der Einzelsprecher als entmischte Signale.

(Andere Anwendungen - insbesondere aus dem Medizinbereich (EEG, MEG) - werden weiter unten erläutert.

Eine Vorrichtung zur Durchführung des erfindungsgemäßen Verfahrens beruht dabei auf einem System, welches einen Lösungsalgorithmus für die angegebenen Gleichungen beinhaltet. Die Realisierung der konkreten Schaltung kann in paralleler, serieller oder auch gemischt parallel/serieller Anordnung erfolgen. Die Elemente der Hardware sind als arithmetische Baugruppen zur Ausführung der genannten Algorithmen aufgebaut. Es handelt sich dabei um die Gleichungen (27) bis (29) sowie (8) bis (10), und (31) bis (36). Dazu. lassen sich entweder komplette Prozessoren mit den entsprechenden, in Speichern festgehaltenen Programmen verwenden oder aber spezielle Hardwarekomponenten, welche Addierer, Multiplizierer und ein Modul zur Inversion der Matrix $(1+T_t)^{-1}$ aufweisen. Weiterhin muß eine Vorrichtung zur Berechnung der Norm des Flusses vorgesehen sein.

Die Funktionsweise ist dabei wie folgt:

Die "learning of learning" Idee von Sompolinski et al. 1995 wird funktionell für den allgemeinen Fall erweitert, daß (a) eine kontinuierliche Fehlerfunktion und/oder (b) die Hessematrix gegeben ist oder weder (a) noch (b) gegeben ist und nur (c) ein Fluß definiert werden kann, oder (d) Kovarianzmatrizen berechnet werden.

Hierfür sind folgende Bedingungen maßgeblich:

i. Sind (a) kontinuierliche Fehlerfunktion und (b) die Hessematrix gegeben, so werden die Gleichungen (8) bis (10) verwendet.

ii. Ist nur eine kontinuierliche Fehlerfunktion ohne Hessematrix gegeben, so werden die Gleichungen (27) bis (29) verwendet, wobei der Gradient der Fehlerfunktion als Fluß dient und $\xi=\|\langle f \rangle\|$.

iii. Ist nur (c) ein Fluß definiert, so wird Gleichungen (27) bis (29) verwendet und $\xi=\|\langle f \rangle\|$.

iv. Ist auch kein Fluß definiert, so werden die Gleichungen (31) bis (36) verwendet.

Der Fluß kann dabei beliebig, entsprechend den Ansätzen von Bell et al. (1995), Jutten et al. (1991), Molgedey & Schuster 1994 oder beliebigen anderen Quellentrennungsalgorithmen gewählt werden.

Dabei bildet die Projektion auf $\xi=\|\langle f \rangle\|$ ein sehr wichtiges Element des erfindungsgemäßen Verfahrens. Für die genannten Fälle kann damit bewiesen werden, daß das erfindungsgemäße Verfahren ein optimales Konvergenzverhalten zeigt.

Bei dem in Figur 1 dargestellten Ausführungsbeispiel wird von einem Mischsignal 1 ausgegangen. Dieses Signal enthält die Signale einzelner Signalquellen gegebenenfalls mit einem nicht zu trennenden Hintergrundsignal. Aus diesem Signal werden mittels zweier Mikrofone Signalanteile als Beispielsignale 1.1 und 1.2 entnommen. Die Möglichkeit der Entnahme weiterer Signale ist durch gestrichelte Linien angedeutet.

Die Signale 1.1 und 1.2 (und gegebenenfalls weitere) werden einer Entmischungsstufe 2 zugeführt, in der die Signaltrennung nach einem bekannten Algorithmus erfolgt. Die Entmischungsstufe enthält bei der bevorzugten Ausführung eine Schaltmatrix, mittels der einzelne Eingänge zeitweise mit einzelnen Ausgängen unter entsprechender Gewichtung verbunden werden können. Dies kann auch mit multiplikativer oder additiver Überlagerung erfolgen. In Betracht kommt auch eine reine Schaltmatrix bei der die Signalintensitäten am Ausgang durch Modulation der Impulsdauer und entsprechende Integration erzeugt wird. Die Ansteuerung der (in der Zeichnung nicht näher dargestellten) Schaltmatrix erfolgt mit entsprechenden Steuersignalen, die vom Ausgang eines später zu beschreibenden entsprechenden Steuerbaustein ausgehen.

Die getrennten Ausgangssignale 3.1 und 3.2 bilden entmischte Signale und stellen im dargestellten Beispielsfall die akustischen Signale der einzelnen Klangquellen dar. Konkret sind dies hier die Sprachsignale der beiden Sprecher.

Die Beispielsignale 1.1 und 1.2 aus dem Mischsignal und die entmischten Signalen 3.1 und 3.2, sowie die im vorherigen Durchgang in einer dritten Baugruppe 7 ermittelte Lernrate werden einer ersten Baugruppe zur Bewertung des entmischten Signals 4 zugeführt. In der ersten Baugruppe 4 werden in Abhängigkeit von einem aus einen Entscheidungs-Modul 5 abgeleiteten Signal entweder die Algorithmen (10) oder (28), oder (31) angewendet.

Eine Fallunterscheidung bezüglich der Anwendung der verschiedenen Algorithmen wird in dem Entscheidungsmodul 5 getroffen, in der durch UND-Gatter die nachfolgend beschriebenen logischen Signalverknüpfungen realisiert sind:

i. Sind (a) kontinuierliche Fehlerfunktion und (b) die Hessematrix gegeben, so wird ein Steuersignal ausgegeben, daß die Verwendung der Gleichungen (8) bis (10) veranlaßt.

ii. Ist nur die kontinuierliche Fehlerfunktion ohne Hessematrix gegeben, so wird ein Steuersignal ausgegeben, daß die Verwendung der Gleichungen (27) bis (29) veranlaßt, wobei der Gradient der Fehlerfunktion als Fluß dient und $\xi=\|\langle f \rangle\|$ gilt.

iii. Ist nur (c) ein Fluß definiert, so wird ein Steuersignal ausgegeben, daß die Verwendung der Gleichungen (27) bis (29) veranlaßt.

iv. Ist (d) weder eine kontinuierliche Fehlerfunktion noch ein Fluß definiert, so wird ein Steuersignal ausgegeben, daß die Verwendung der Gleichungen (31) bis (36) veranlaßt, und Kovarianzmatrizen werden zur Bewertung des entmischten Signals verwendet.

In Figur 1a sind Details des Entscheidungs-Moduls 5 wiedergegeben. In den Blöcken 5.1 bis 5.3 und 5.6 werden dabei jeweils die Eingangsbedingungen (a) bis (d) entsprechend der vorangehenden Aufstellung ermittelt. In der Stufe 5.4 erfolgen die logischen Entscheidungen entsprechend dem vorstehenden Schema. Die dabei notwendigen Negationen ergeben sich über die entsprechenden invertierenden Eingänge der dargestellten UND-Gatter. In der Stufe 5.5 werden die Ausgangssignale der Stufe 5.4 zu einem einzigen Signal zusammengefaßt, dessen Wert bestimmt, welcher der oben genannten Fälle (i) bis (iv) vorliegt.

Das Ergebnis der Bewertung des entmischten Signals sowie das Steuersignal gelangt dann an eine zweite Baugruppe 6, in der die Adaptation der Schaltmatrix erfolgt. Je nach Steuersignal werden in der Baugruppe 6 die Gleichungen (8), oder (27), oder (33) bis (36) angewandt.

Diese Baugruppe steht in Wechselwirkung mit der dritten Baugruppe für die Lernratensteuerung 7. Es ist ersichtlich, daß mit den Algorithmen des erfindungsgemäßen Verfahrens sich die Lernrate, d.h. die Änderung des die Entmischungsstufe über einen Steuerbaustein 8 beeinflussenden Algorithmus entsprechend der aktuellen Änderung der Lernrate des Systems anpaßt. Der Steuerbaustein 8 enthält die zur Ansteuerung der Entmischungsstufe notwendigen elektrischen Bauelemente.

Die Lernrate wird also ebenfalls vom adaptiven Algorithmus geregelt, und zwar, abhängig von dem im Entscheidungsmodul 5 erzeugten Steuersignal, nach den Algorithmen (9) oder (27) oder (32). Damit kann das System Änderungen der Quellen sowohl in ihrer Intensität als auch bezüglich der Änderung der Intensität und anderer Signaleigenschaften optimal schnell folgen. Verläuft der Prozeß stationär, "kühlt sich die Lernrate ab".

Als Ergebnis der Beispielanwendung im Bereich akustischer Quellentrennung nichtstationärer Mischungen wurden die nachfolgend beschriebenen weiteren Ergebnisse erhalten.

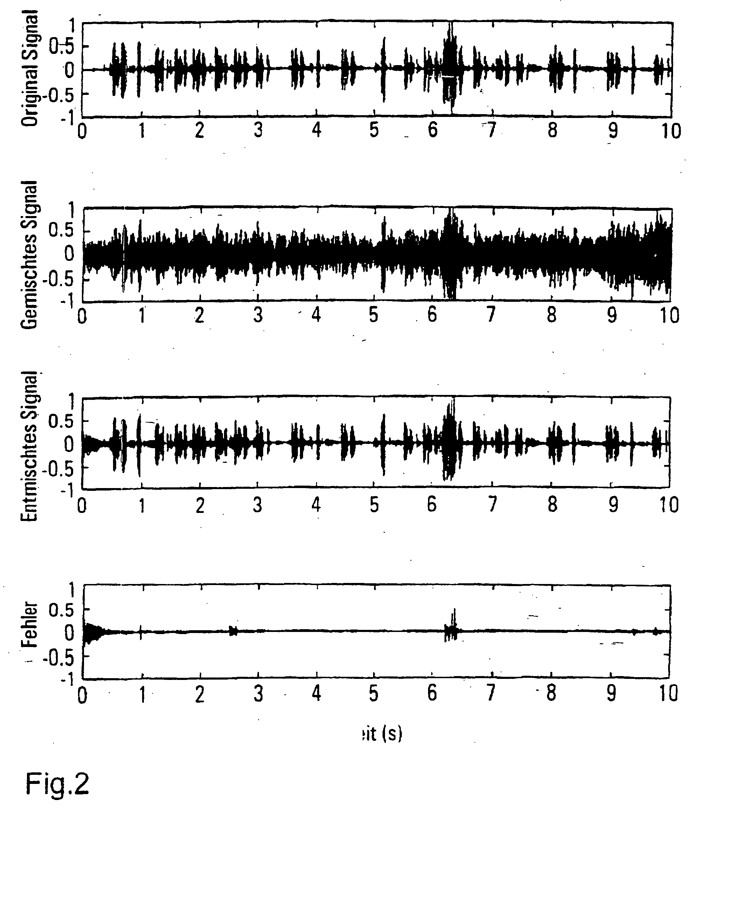

Als Beispiel wurden zwei Audiosignale bestehend aus Sprache und Musik (mit einer Samplingrate von 8 kHz) verwendet: "Fischers Fritz" ($s_t^1$) und "Donauwalzer" $s_t^2$ (siehe Fig. 2). Als Signal 1 wurde der bekannte Zungenbrecher "Fischers Fritz fischt frische Fische ..." aufgenommen, während Signal 2 ein Teil des "Donauwalzer" von J. Strauß ist. Beide akustische Quellen wurden auf dem Computer gemischt entsprechend

$$\vec{I}_t = (1+A)\vec{s}_t \qquad f. \qquad 0s < t < 2{,}5s \text{ und } 6{,}25s < t < 10s \qquad (30)$$

$$\vec{I}_t = (1+B)\vec{s}_t \qquad f. \qquad 2{,}5s \leq t < 6{,}25 \qquad (31)$$

gemischt mittels

$$A = \begin{pmatrix} 0 & 0{,}9 \\ 0{,}7 & 0 \end{pmatrix} \quad \text{und} \quad B = \begin{pmatrix} 0 & 0{,}8 \\ 0{,}6 & 0 \end{pmatrix}$$

als Mischungsmatrizen. Das heißt, die den Daten unterliegende Statistik schaltet zweimal in diesem Datensatz. Das Ziel ist nun, die Quellen $\vec{s}_t$ zu erhalten, indem $\hat{A}$ und $B$ zunächst geschätzt werden. Dazu stehen nur die gemessenen Mischsignäle $\vec{I}_t$ zur Verfügung - alles andere ist unbekannt. Daher wird dieses Problem auch oft "blinde Quellentrennung" genannt. Eine Änderung der Mischung findet man oft in der Praxis, wenn beispielsweise ein Sprecher seinen Kopf während des Sprechens bewegt oder seine Position wechselt.

Der erfindungsgemäße adaptive On-line-Algorithmus ist besonders für dieses instationäre Szenario geeignet, da seine Adaptionsschnelligkeit nicht durch die bereits oben diskutierten generischen Nachteile einer konstanten Lernrate limitiert ist - wie in den Ansätzen von Bell et al. 1995, Jutten et al. 1991, Molgedey & Schuster 1994. Es sei $\vec{u}_t$ der Vektor des entmischten Signals

$$\vec{u}_t = (1+T_t)^{-1}\vec{I}_t \qquad (32)$$

wobei $T$ die geschätzte Mischungsmatrix ist. Basierend auf dem Algorithmus von Molgedey & Schuster 1994 wird als Lernregel für $T_t$

$$\Delta T_t^{ij} \propto f(\langle l_t^i u_t^j \rangle, \langle u_t^i u_t^j \rangle, \langle l_t^i u_{t-1}^j \rangle, \langle u_j^i u_{t-1}^j \rangle, ...)$$

$$\propto \langle l_t^i u_t^j \rangle \langle u_t^i u_t^j \rangle + \langle l_t^i u_{t-1}^j \rangle \langle u_t^i u_{t-1}^j \rangle, \qquad i,j=1,2, \ i \neq j, \tag{33}$$

benutzt, wobei die instantanen Mittelwerte durch die oben definierten gleitenden (leaky) Mittelwerte ersetzt werden.

$$\langle l_t^i u_t^j \rangle_{leaky} = (1-\in)\langle l_{t-1}^i u_{t-1}^j \rangle_{leaky} + \in l_t^i u_t^j.$$

Hier ist zu bemerken, daß die notwendigen Bestandteile des Flusses f aus Gleichungen (27) bis (28) für diesen Fall einfach die gleichzeitigen oder zeitversetzten Korrelationen sind und $\eta_t$ gemäß Gleichung (29) berechnet wird.

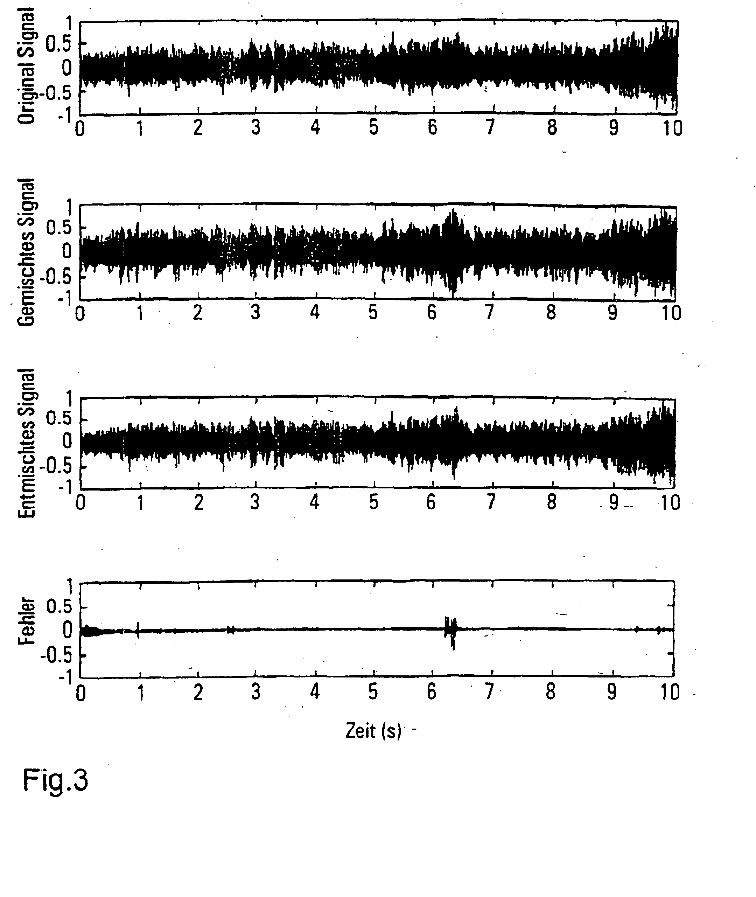

Fig. 3 zeigt das Resultat der Simulation (Details der Parameterwahl sind in der Bildunterschrift erklärt). Nach einer kurzen Zeit (t = 0,4 s) von großer Lernrate η und starken Fluktuationen in η wurde die Mischungsmatrix korrekt geschätzt. Bis t = 2,5 s wird die Lernrate automatisch entsprechend *1/t* (siehe untere Darstellung in Fig. 3) "abgekühlt", wie auch in Gl.(25) vorhergesagt, d.h. es wird auch im Experiment die optimale "Abkühlrate" gefunden. Am Schaltpunkt, an dem simples "Abkühlen" versagt hätte, vergrößert der erfindungsgemäße adaptive Algorithmus, wie gewünscht, die Lernrate drastisch und ist damit auch in der Lage, den durch das Schalten veränderten Mischungen innerhalb von 0,1 s (bzw. 0,2 s beim zweiten Schalten) zu folgen. Danach wird die Lernrate, wie gewünscht, wiederum "abgekühlt".

Vergleicht man Misch-, Original- und entmischtes Signal in Fig. 2, dann bestätigt sich die schnelle und genaue Schätzung, die bereits für die Mischungsmatrix beobachtet werden konnte. Auch ein Anhören bestätigt die Effizienz des Verfahrens, für Sekundenbruchteile sind beide Signale hörbar, danach nur noch das entmischte Signal. Nach dem Schalten sind wiederum einen kurzen Moment lang beide Signale hörbar. Der Entmischungsprozess geht dabei so schnell vor sich, daß der Hörer das Gefühl hat, ein Signal würde einfach vom Quellentrennungsalgorithmus "ausgeschaltet". Erfolgt eine Adaption in der Größenordnung von 0,1 s, dann wird dies als Knacken empfunden. Der Rauschabstand im entmischten Signal beträgt für das Musiksignal 36 dB und für das Sprachsignal 28 dB.

Das Verfahren wurde natürlich auch für andere Instationaritäten sowohl theoretisch als auch experimentell untersucht.

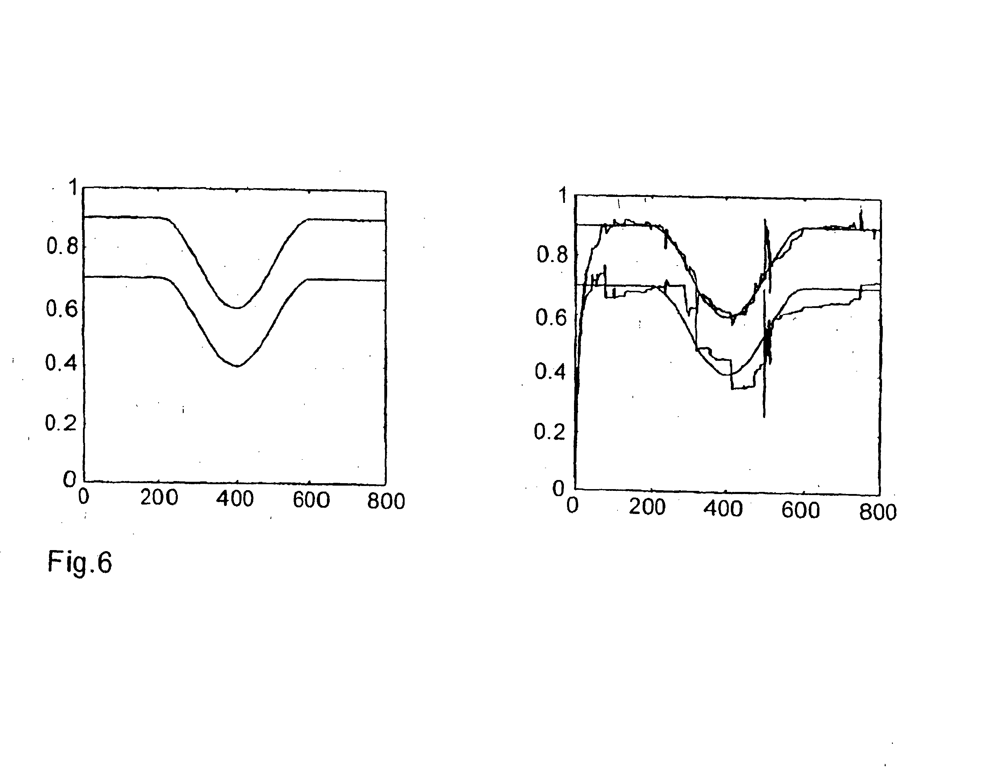

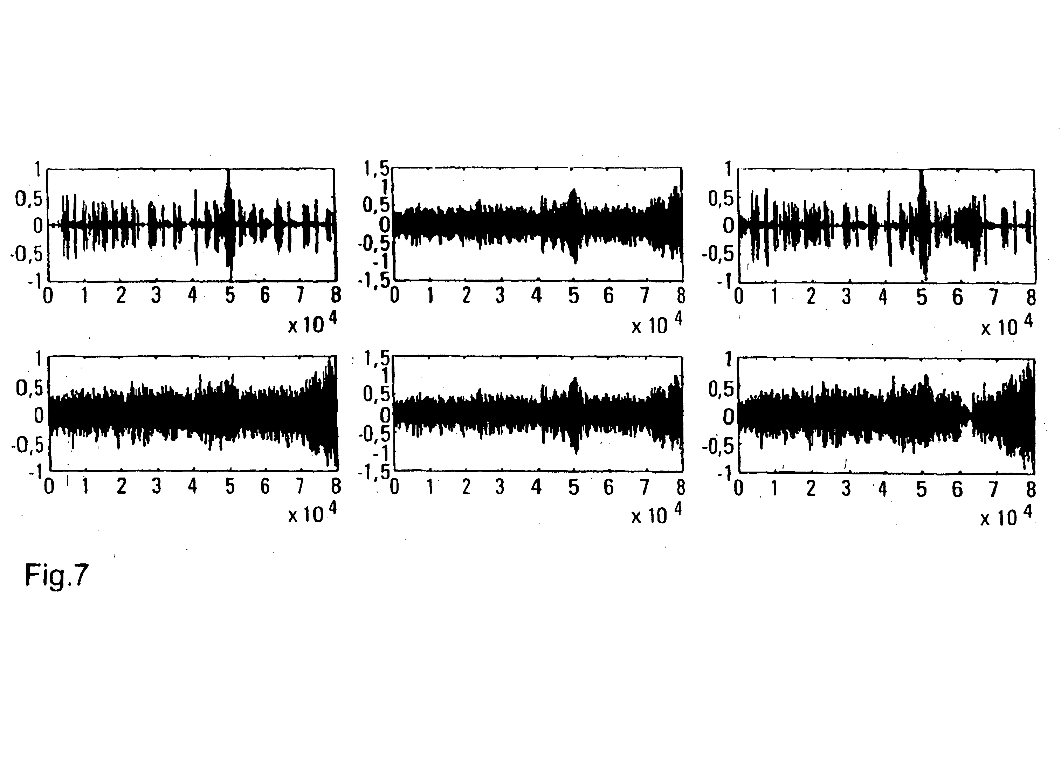

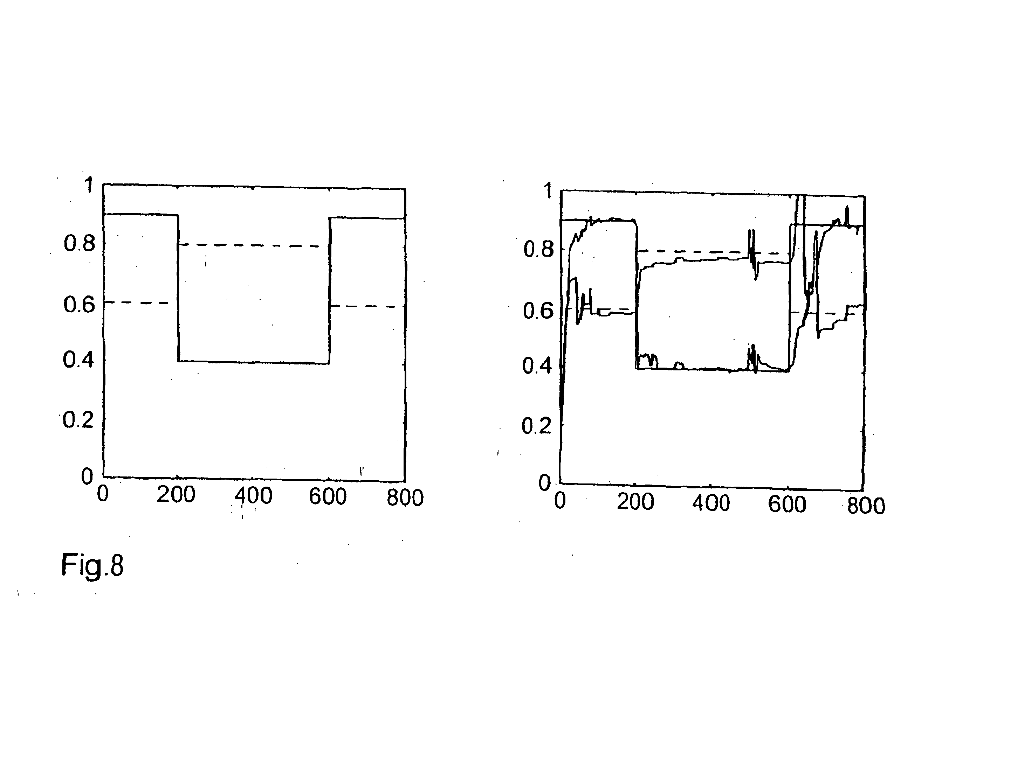

Die weiteren Figuren 6 bis 8 zeigen das Ergebnis weiterer Versuche, bei denen ein kontinuierlicher Übergang und einen weiterer Schaltübergang untersucht wurden.

Für das erfindungsgemäße Verfahren kann die theoretische Zeit, die der Algorithmus braucht, um einer Änderung zu folgen, berechnet werden, so daß eine gute Anpassung an die praktischen Voraussetzungen erfolgen-kann.

Zusammenfassend ergibt sich damit ein exzellentes Adaptionsverhalten des Algorithmus, das sich in vielen weiteren, hier nicht beschriebenen, Experimenten reproduzieren ließ.

Das Verfahren wurde im Experiment bereits erfolgreich zur Trennung von akustischen Signalen angewandt für

- die Trennung mehrerer Sprecher,

- die Trennung von Sprache und Musik,

- die Trennung von Sprache und Hintergrundgeräusch.

Anwendungen des Verfahrens sind für Hörgeräte günstig, welche damit die dynamische Änderungen der akustischen Mischverhältnisse verfolgen können und in Echtzeit durch geeignete Hardware das Hörsignal als Auswahl einzelner Quellen verstärken.

Weiterhin ist das Verfahren für Anwendungen im Verkehrsmittel- (Automobil-)bereich besonders geeignet. Durch eine Online-Trennung von Sprache und Hintergrundgeräusch kann der Störpegel bei einem Telefonat reduziert werden. Bei sprachgesteuerten Eingaben im Automobil kann die Fehlerrate in der Erkennungsleistung durch Reduzierung des Hintergrundgeräuschpegels herabgesetzt werden. Anwendungsmöglichkeiten bestehen weiterhin auf allen Gebieten der Nachrichtentechnik, bei-denen einzelne Signalquellen voneinander oder von einem Hintergrundsignal getrennt werden sollen.

Außerhalb der akustischen Quellentrennung ergeben sich Anwendungen vor allem in der Medizintechnik. Bei der Aufnahme von Multielektroden EEGs (Elektroenzephalogrammen) oder MEGs (Magnetenzophalogrammen) sind die gemessenen Signale stets instationäre Überlagerungen von Gehirnaktivität. Man kann sich vorstellen, daß sich verteilte neuronale Aktivitäten- überlagern und nur so von EEG oder MEG-Geräten gemessen werden können. Da neuronale Aktivitäten hochgradig instationär sind, können bisherige auf stationäre Quellentrennung gestütze Verfahren wie das von Makeig et al. 1996, die instationären Daten niemals korrekt erklären. Hier besteht ein großes Anwendungspotential der erfindungsgemäßen Lösung, da das vorgestellte Verfahren Änderungen der Signale und der Signalorte mit optimaler Schnelligkeit verfolgen kann. Es wäre denkbar, neuronale Aktivitätsmuster des Gehirns On-line- und in Echtzeit verfolgen und bestimmen zu können.

In modernen nichtinvasiven Untersuchungsverfahren der Hirnaktivität werden beispielsweise SQUID-Magnetometer eingesetzt. Dies sind hochempfindliche Sensoren für magnetische Felder. Damit ist es möglich, die sehr schwachen Magnetfelder (Feldstärken im Femtotesla Bereich), die von den elektrischen Ionenströmen der aktivierten Nervenzellen erzeugt werden, nachzuweisen. Da das Magnetfeld der Erde um einiges stärker ist, befinden sich die Sensoren in einem magnetisch abgeschirmten Raum. Dennoch kann es zur Beeinträchtigung der Messungen durch körpereigene biomagnetische Störquellen kommen. So verursachen z. B. die Augenbewegungen (EOG) Verfälschungen der Messungen von evozierten Feldern im visuellen Cortex. Herzschlag (EKG) und Muskeltätigkeit (EMG) sind die Hauptstörquellen bei Messungen am peripheren Nervensystem.

Der Einsatz der adaptiven Quellentrennung ermöglicht es sowohl stationäre als auch instationäre Störer von Augenbewegungen (EOG), Herzschlag (EKG) und Muskeltätigkeit (EMG) - also physiologische Störsignale - und ebenso technische Störsignale aus der Experimentieranordnung (z. B. Stimulusimpulse bei funktionellen Reizreaktionsexperimenten) präzise zu identifizieren und zu eliminieren.

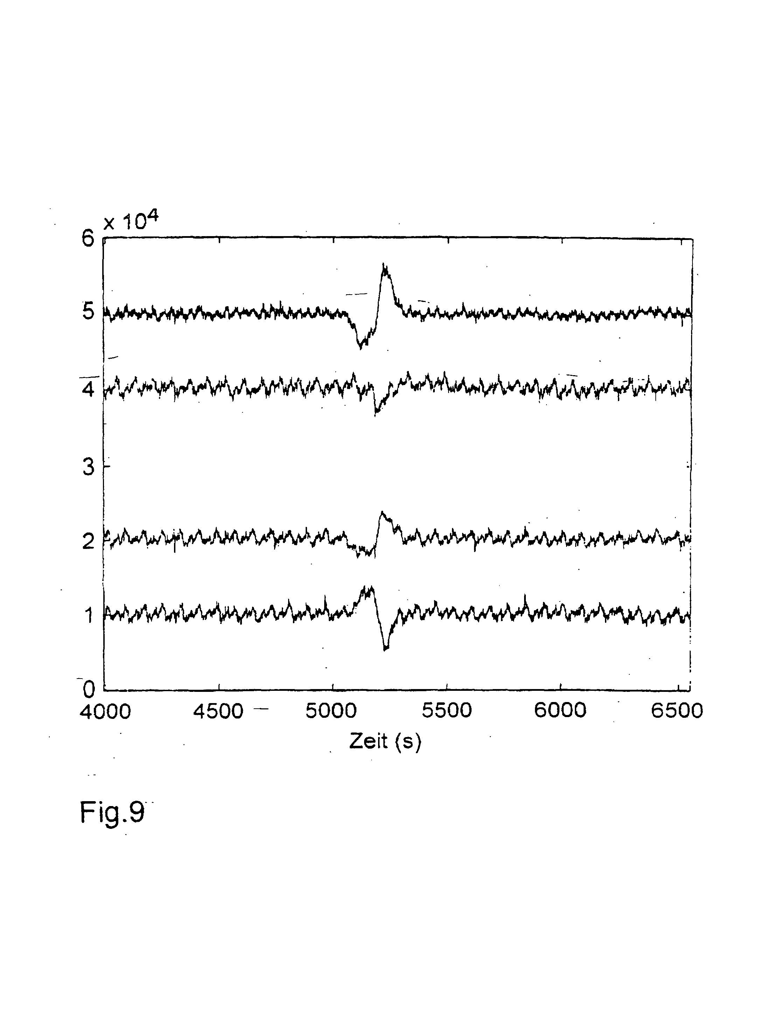

Als Ergebnis einer Anwendung im Bereich magnetische Quellentrennung wurden die nachfolgend beschriebenen Ergebnisse erhalten. Figur 9 zeigt einige SQUID Aufnahmesignale. Das gesuchte magnetische Signal, das von aktivierten Nervenzellen ausgeht, ist von den oben beschriebenen Störquellen überlagert, die um Größenordnungen stärker sind. Das Störsignal vom Herzen ist auf der Figur gut zu erkennen.

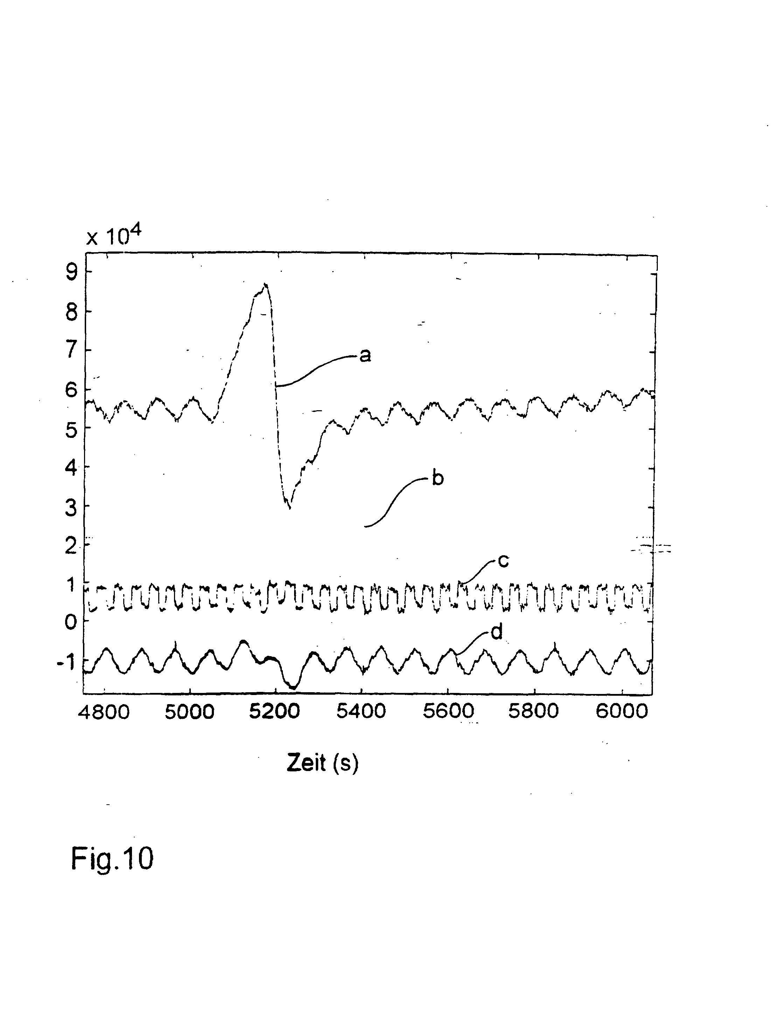

Eine Quellentrennung nach Methode (d) ermöglichte beispielsweise die Extraktion der Störsignale, die von (a) Herz, (b) Stimulus und (c) Netzbrumm (inklusive (d) Harmonischer) herrühren, wie in Figur 10 gezeigt. Durch Subtraktion dieser Störsignale von der Originalmessung wird das gesuchte Signal erhalten.

In medizinischen Untersuchungen, beispielsweise in Schlaflaboratorien, stehen verschiedene Signaltypen zur Verfügung (z.B. EEG, EKG, Atmung, EOG, Blutdruck usw.) Diese Signale sind instationäre Überlagerungen verschiedener unterliegender wahrer Signale, die man nicht kennt. Bisher wurde in der Datenanalyse ausschließlich von einem Stationaritätsparadigma ausgegangen. Es ist nun möglich, die Instationaritäten zu berücksichtigen.

Eine weitere Anwendung besteht in der Tele-Identifikation (Multiobjektidentifikation) Das System besteht aus einer fest montierten Basisstation und zahlreichen mobilen Minisendern. Die Basisstation sendet permanent eine elektromagnetische Welle z.B. der Frequenz 120 Hz. Kommt nun einer der Minisender so nah an die Basisstation heran, daß die Energie ausreicht, den Minisender in Betrieb zu setzen, sendet dieser den auf (s)einem Speicherchip befindlichen Code. Dieses Codesignal wird von der Basisstation empfangen und decodiert. Der empfangene Code kann jetzt beispielsweise dazu benutzt werden, den Minisender (und damit das Objekt) zu identifizieren und weitere Informationen aus einer Datenbank abzurufen.

Der Einsatz von Verfahren zur Quellentrennung wird insbesondere dann nötig, wenn sich mehrere Sender gleichzeitig im Bereich einer Basisstation befinden und sich die Signale überlagern. In der Praxis kommt dabei meist erschwerend hinzu, daß sich die Sender bewegen und so die Mischung der Signale nicht stationär ist. Für dieses Problem bietet der erfindungsgemäße Algorithmus zur adaptiven Quellentrennung die geeignete Lösung.

**Patentansprüche**

1. Verfahren zur nichtstationären Trennung von physikalischen Signalen s unterschiedlicher Quellen aus Mischungssignalen I mit I = Ms, wobei M eine invertierbare Mischungsmatrix darstellt,
mit den Schritten:

(i) Erfassen von Signalwerten $I_{t+1}$ des Signalgemisches I,

(ii) Berechnen eines Funktionswertes $f(I_{t+1};w_t)$ auf der Grundlage des Ergebnisses von (i), wobei ein Fluss f eine Funktion der Signalwerte I und von Parametern $w_t$ ist, die eine Schätzung unbekannter Parameter w* der Mischungsmatrix M darstellen, und wobei der Erwartungswert $<f>(w_t)$ des Flusses f gleich Null ist, wenn die geschätzten Parameter $w_t$ den Parametern w* entsprechen,

(iii) Adaptieren der geschätzten Parameter $w_t$ durch Berechnung von $w_{t+1} = w_t - \eta_t f(I_{t+1};w_t)$ auf der Grundlage des Ergebnisses von (ii) sowie einer Lernrate $\eta_t$,

(iv) Adaptieren der Lemrate durch Berechnung von $\eta_{t+1}=\eta_t+a\eta_t(\beta\|r_{t+1}\|-\eta_t)$ auf der Grundlage der Ergebnisses von (ii), wobei $a$ und $\beta$ Konstanten sind und $\|r_{t+1}\|$ eine Norm eines gleitenden Mittelwertes $r_{t+1}$ des Flusses f darstellt, der durch $r_{t+1} = (1-\delta)r_t + \delta\, f(I_{t+1};w_t)$ gegeben ist, wobei $0<\delta<1$ ist, und

(v) Berechnen zumindest eines der Signale s aus $s_{t+1} = M^{-1}I_{t+1}$ auf der Grundlage der Ergebnisse von Schritt (i) und der in Schritt (iii) geschätzten Parameter $w_{t+1}$ der Mischungsmatrix M, wobei die Abfolge der Schritte (iii) und (iv) vertauschbar ist.

**2.** Verfahren nach Anspruch 1, bei dem der Fluß f in Form eines Produktes einer positiv-definiten Matrix $C(\hat{w}_t)$ und des Gradienten

$$\frac{\partial}{\partial w}I(x_{t+1};y_{t+1};\hat{w}_t)$$

dargestellt ist, wobei $C(\hat{w}_t)$ ein Riemannscher metrischer Tensor im Raum der $\{w\}$, und $I(x,y;\hat{w})$ eine differenzierbare Fehlerfunktion ist.

**3.** Verfahren nach Anspruch 1, bei dem der Fluß f in Form eines Produktes einer inversen Matrix $K^{-1}(\hat{w}_t)$ der Hesse-schen Matrix

$$\frac{\partial^2 R(\hat{w}_t)}{\partial w \partial w}$$

eines Erwartungswertes $R(w)=\langle I(x,y;w)\rangle$ einer differenzierbaren Fehlerfunktion $I(x,y;\hat{w})$ und des Gradienten

$$\frac{\partial}{\partial w}I(x_{t+1};y_{t+1};\hat{w}_t)$$

der Fehlerfunktion $I(x,y;\hat{w})$ dargestellt ist.

**Claims**

**1.** A method of non-stationary separation of physical signals s from various sources from mixture signals I with I = Ms, wherein M represents an invertible mixing matrix, comprising the steps:

(i) detecting signal values $I_{t+1}$ of the signal mixture I,

(ii) calculating a function value $f(I_{t+1}, w_t)$ on the basis of the result of (i), wherein a flow f is a function of the signal values I and parameters $w_t$ which represent an estimate of unknown parameters w* of the mixing matrix M, and wherein the expected value $<f>(w_t)$ of the flow f is equal to zero when the estimated parameters $w_t$ correspond to the parameters w*,

(iii) adapting the estimated parameters $w_t$ by calculation of $w_{t+1} = w_t - \eta_t f(I_{t+1};w_t)$ on the basis of the result of (ii), and a learning rate $\eta_t$,

(iv) adapting the learning rate by calculation of $\eta_{t+1} = \eta_t + a\eta_t(\beta\|r_{t+1}\|-\eta_t)$ on the basis of the result of (ii), wherein a and $\beta$ are constants and $\|r_{t+1}\|$ represents a standard of a sliding mean value $r_{t+1}$ of the flow f, which is given by $r_{t+1} = (1-\delta)r_t+\delta f(I_{t+1}; w_1)$ wherein $0<\delta<1$, and

(v) calculating at least one of the signals s from $s_{t+1} = M^{-1}I_{t+1}$ on the basis of the results of step (i) and the parameters $w_{t+1}$ of the mixing matrix M estimated in step (iii), wherein the sequence of steps (iii) and (iv) is interchangeable.

**2.** A method according to claim 1 wherein the flow f is represented in the form of a product of a positive-definite matrix $C(\hat{w}_t)$ and the gradient

$$\frac{\partial}{\partial w}I(x_{t+1};y_{t+1};\hat{w}_t),$$

wherein $C(\hat{w}_t)$ is a Riemann metric tensor in the space of $\{w\}$ and $I(x,y;\hat{w})$ is a differentiable error function.

**EP 0 943 130 B1**

3. A method according to claim 1, wherein the flow f is represented in the form of a product of an inverse matrix $K^{-1}$ ($w_t$) of the Hesse matrix

$$\frac{\partial^2 R(\hat{w}_t)}{\partial w \partial w}$$

of an expected value $R(w) = \langle l(x, y; w) \rangle$ of a differentiable error function $l(x,y; \hat{w})$ and the gradient

$$\frac{\partial}{\partial w} l(x_{t+1}; y_{t+1}; \hat{w}_t)$$

of the error function $l(x,y;\hat{w})$.

**Revendications**

1. Procédé pour la séparation non stationnaire de signaux physiques s de sources différentes à partir de signaux de mélange I avec I = Ms, M étant une matrice de mélange pouvant être inversée, comportant les étapes:

(i) détection de valeurs $I_{t+1}$ de signaux du mélange de signaux I,
(ii) calcul d'une valeur de fonction $f(I_{t+1}; w_t)$ sur la base du résultat de (i), un flux f étant une fonction des valeurs I des signaux et de paramètres $w_t$, qui représentent une estimation de paramètres inconnus w* de la matrice de mélange M, et la valeur d'espérance <f>($w_t$) du flux f étant égale à zéro lorsque les paramètres estimés $w_t$ correspondent aux paramètres w*,
(iii) adaptation des paramètres estimés $w_t$ par calcul de $w_{t+1} = w_t - \eta_t f(I_{t+1};w_1)$ sur la base du résultat de (ii) ainsi que d'un taux d'apprentissage $\eta_t$,
(iv) adaptation de la cadence d'apprentissage par calcul de $\eta_{t+1} = \eta_t+a\eta_t(\beta||r_{t+1}||-\eta_t)$ sur la base du résultat de (ii), a et β étant des constantes et $||r_{t+1}||$ représentant une norme de la valeur moyenne glissante $r_{t+1}$ du flux f, qui est déterminée par $r_{t+1} = (1-\delta)r_t+\delta f(I_{t+1};w_t)$, avec $0 < \delta < 1$, et
(v) calcul d'au moins l'un des signaux s à partir de $s_{t+1} = M^{-1}I_{t+1}$ sur la base des résultats de l'étape (i) et des paramètres $w_{t+1}$, estimés lors de l'étape (iii), de la matrice de mélange M, la séquence des étapes (iii) et (iv) étant permutable.

2. Procédé selon la revendication 1, selon lequel le flux f est représenté sous la forme d'un produit d'une matrice définie de façon positive $C(w_t)$ et du gradient

$$\frac{\partial}{\partial w} l(x_{t+1}; y_{t+1}; \hat{w}_t)$$

$C(\hat{w}_t)$ étant un tenseur métrique de Reimann dans l'espace des {w}, et $l(x,y;\hat{w})$ étant une fonction d'erreur différentiable.

3. Procédé selon la revendication 1, selon lequel le flux f est représenté sous la forme d'un produit d'une matrice inverse $K^{-1}(w_t)$ de la matrice de Hesse

$$\frac{\partial^2 R(\hat{w}_t)}{\partial w \partial w}$$

d'une valeur d'espérance $R(w) = <l(x,y;w)>$ d'une fonction d'erreur différentiable $l(x,y;w)$ et du gradient

$$\frac{\partial}{\partial w} l(x_{t+1}; y_{t+1}; \hat{w}_t)$$

de la fonction d'erreur $l(x,y;\hat{w})$.

Fig.1

Fig.1a

EP 0 943 130 B1

Fig.2

Fig.3

Fig.4

Fig.5

Fig.6

EP 0 943 130 B1

Fig.7

24

Fig.8

Fig.9

Fig.10